# EUROPEAN PATENT APPLICATION

(11) **EP 4 826 494 A1**
(43) Date of publication of application: **21.10.2026**
(21) Application number: 24902752.5
(22) Date of filing: 09.12.2024
(51) Int. Cl.: G06F 3/01, G06F 3/04815

(54) **HAPTIC DATA PROCESSING METHOD AND RELATED DEVICES**

(30) Priority: 11.12.2023 CN 202311697139
(71) Applicant: Vivo Mobile Communication Co., Ltd., Dongguan, Guangdong 523863 (CN)
(72) Inventor: WANG, Huan, Dongguan, Guangdong 523863 (CN); LV, Zhuoyi, Dongguan, Guangdong 523863 (CN); WU, Xiaoqian, Dongguan, Guangdong 523863 (CN); HE, Dazhong, Dongguan, Guangdong 523863 (CN); ZHANG, Kehan, Dongguan, Guangdong 523863 (CN)
(74) Representative: Lavoix
(86) International application number: PCT/CN2024/137729
(87) International publication number: WO 2025/124331

(57) **Abstract**

This application discloses a haptic data processing method and a related device, and pertains to the field of rendering technologies. The haptic data processing method in embodiments of this application includes: obtaining haptic data based on data source position related information in an action object or a trigger object in an interactivity behavior; and obtaining target haptic data from the haptic data based on trigger information associated with the trigger object, where the trigger information includes at least one of the following: whether a collision occurs, collision position information, and collision manner information.

## Description

### CROSS-REFERENCE TO RELATED APPLICATIONS

This application claims priority to Chinese Patent Application No. 202311697139.1 filed in China on December 11, 2023, which is incorporated herein by reference in its entirety.

### TECHNICAL FIELD

This application pertains to the field of rendering technologies, and specifically relates to a haptic data processing method and a related device.

### BACKGROUND

A haptic signal is rendered based on interactivity extension (interactivity extension). Interactivity is defined based on a behavior (behavior), the behavior includes a trigger object (trigger object) and an action object (action object), and a haptic feedback action (ACTION_SET_HAPTIC) in the action object is used to trigger feedback of the haptic signal. However, ACTION_SET_HAPTIC supports only direct playing of a pre-stored haptic signal, limiting the flexibility of haptic feedback.

### SUMMARY

Embodiments of this application provide a haptic data processing method and a related device, to resolve the problem in the related art that haptic feedback actions support only direct playback of pre-stored haptic signals, thereby limiting the flexibility of haptic feedback.

According to a first aspect, a haptic data processing method is provided. The method is performed by a render side, and includes:
obtaining haptic data based on data source position related information in an action object or a trigger object in an interactivity behavior; and
obtaining target haptic data from the haptic data based on trigger information associated with the trigger object, where
the trigger information includes at least one of the following: whether a collision occurs, collision position information, and collision manner information.

According to a second aspect, a haptic data processing apparatus is provided, including:
a first obtaining module, configured to obtain haptic data based on data source position related information in an action object or a trigger object in an interactivity behavior; and
a second obtaining module, configured to obtain target haptic data from the haptic data based on trigger information associated with the trigger object, where
the trigger information includes at least one of the following: whether a collision occurs, collision position information, and collision manner information.

According to a third aspect, an electronic device is provided. The electronic device includes a processor and a memory. The memory stores a program or instructions runnable on the processor; and when executed by the processor, the program or instructions implement the steps of the method according to the first aspect.

According to a fourth aspect, an electronic device is provided, including a processor and a communication interface. The processor is configured to obtain haptic data based on data source position related information in an action object or a trigger object in an interactivity behavior; and
obtain target haptic data from the haptic data based on trigger information associated with the trigger object, where
the trigger information includes at least one of the following: whether a collision occurs, collision position information, and collision manner information.

According to a fifth aspect, a readable storage medium is provided. A program or instructions are stored on the readable storage medium; and when executed by a processor, the program or instructions implement the steps of the method according to the first aspect.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program/program product is provided. The computer program/program product is stored in a storage medium, and the computer program/program product is executed by at least one processor to implement the steps of the method according to the first aspect.

In embodiments of this application, the haptic data is obtained based on the data source position related information in the action object or the trigger object in the interactivity behavior, and the target haptic data is obtained from the haptic data based on the trigger information associated with the trigger object, where the trigger information includes at least one of the following: whether a collision occurs, collision position information, and collision manner information. With the above solution, different target haptic data can be selected, based on the trigger information associated with the trigger object, from the haptic data for rendering, so as to obtain different haptic feedback characteristics based on the different target haptic data, thereby improving the flexibility of haptic feedback.

### BRIEF DESCRIPTION OF DRAWINGS

FIG. 1 is a schematic diagram of access to haptic data according to an embodiment of this application;
FIG. 2 is a schematic flowchart of a haptic data processing method according to an embodiment of this application;
FIG. 3 is a schematic diagram of modules of a haptic data processing apparatus according to an embodiment of this application;
FIG. 4 is a structural block diagram of an electronic device according to an embodiment of this application; and
FIG. 5 is a structural block diagram of a terminal according to an embodiment of this application.

### DESCRIPTION OF EMBODIMENTS

The technical solutions in embodiments of this application are clearly described below with reference to the accompanying drawings in embodiments of this application. It is clear that the described embodiments are part of embodiments of this application, but not all embodiments. All other embodiments obtained by persons of ordinary skill in the art based on embodiments of this application fall within the protection scope of this application.

The terms "first", "second", and the like in this application are used to distinguish between similar objects, but are not used to describe a particular order or sequence. It should be understood that the terms used in such a way may be interchanged under appropriate circumstances, so that embodiments of this application can be implemented in sequences other than those illustrated or described herein, and the objects distinguished by "first" and "second" are usually of one type, and the number of objects is not limited. For example, there may be one or more first objects. In addition, the "or" in this application indicates at least one of the connected objects. For example, "A or B" includes three schemes: scheme 1 includes A but not B; scheme 2 includes B but not A; and scheme 3 includes both A and B. The character "/" generally indicates that the preceding and following associated objects are in an "or" relationship.

The term "indicate" in this application may be a direct indication (or an explicit indication) or an indirect indication (or an implicit indication). The direct indication may be understood as a sender explicitly informing a receiver of content such as specific information, an operation to be performed, or a request result, in the sent indication. The indirect indication may be understood as the receiver determining corresponding information based on the indication sent by the sender, or performing judgment and determining the operation to be performed, the request result, or the like based on a result of the judgment.

To make persons skilled in the art better understand embodiments of this application, the following description is first provided.

### 1. Scene synthesis or rendering process.

A rendering engine may synthesize scenes based on a glTF (3D model file format) file, or render the scenes based on a glTF file. A manner of obtaining the glTF file by the engine includes: A server side and a client side perform transmission and exchange of the glTF file by using a glTF state stream, or obtain the glTF file via program files stored on the server side and the client side.

For rendering of a haptic scene, the engine may obtain feedback of a haptic signal, one or more operations of encoding, transmission, decoding, and the like of the haptic signal are performed, and a haptic signal actuator plays the haptic signal.

2. The moving pictures experts group (Moving Pictures Experts Group, MPEG) has made haptic extension (haptic extension) for glTF (3D model file format).

MPEG_haptic extension provides a method for accessing haptic data. MPEG_haptic includes a group of haptic objects (hapticObjects), as shown in Table 1. As shown in Table 2, an accessor (accessor) property in hapticObjects further points to a haptic data source.

**Table 1**

| Name (Name) | Type (Type) | Default (Default) | Description (Description) |
|---|---|---|---|
| hapticObjects | Array (Array)<MPEG _Haptics.haptic Object> | N/A | Provide a list of root-level haptic elements to enable haptic support. |

**Table 2**

| Name (Name) | Type (Type) | Default (Default) | Description (Description) |
|---|---|---|---|
| Accessors | array<integer> | N/A | An accessor array for one or more media sources within an MPEG_media.media array containing a haptic media file |

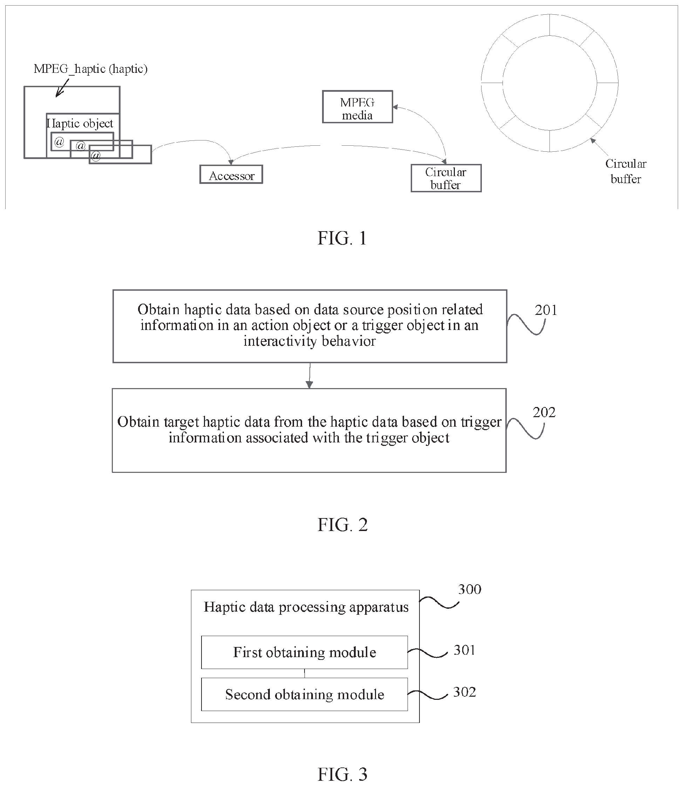

FIG. 1 shows a specific manner of access to the haptic data. hapticObjects in MPEG_haptic points to an accessor, and the accessor further points to a circular buffer object (circular buffer object). The circular buffer object provides data position information for accessing a circular buffer, and also reflects rendering property information of the haptic data by referencing an MPEG_media object.

3. The MPEG has also made haptic material extension (MPEG_haptic_material extension) for glTF.

MPEG_haptic_material extension provides a haptic characteristic for a material. MPEG_haptic_material includes a materials (materials) property. Table 3 shows MPEG_haptic_material, and Table 4 shows MPEG_haptic_material.material.

**Table 3**

| Name (Name) | Type (Type) | Default (Default) | Description (Description) |
|---|---|---|---|
| materials | Array<MPEG_ haptic_material .material> | N/A | Provide a list of root-level haptic materials to enable haptic support. |

The materials property points to a group of material objects. Each material object further points to, by using a haptic (haptic) property, hapticObject in MPEG_haptic that provides a data source, and indicates related material haptic characteristics (such as stiffness (stiffness) and friction (friction)) and texture coordinate (texture coordinate) related information.

**Table 4**

| Name (Name) | Type (Type) | Default (Default) | Description (Description) |
|---|---|---|---|
| haptic | integer | N/A | Index of an element in a hapticObjects array of MPEG_haptic extension. It is used to "reference" a texture to access haptic information. |
| stiffness | array<enumeration, textureInfo> | NULL | For determining perceived stiffness of a surface. This means that a user perceives a force opposite to that of normal penetration of a body part into a material. |
| | | | It is described using a texture storing a stiffness coefficient. A suggested rendering model is: F = kx, where k is a stiffness value along a displacement x of an asset stiffness function. |
| | | | This model applies to isotropic materials. |
| friction | array<enumeration, textureInfo> | NULL | Represents a perceived friction force, which is a force opposite to that of a motion of the body part sliding on a surface. It is described using a texture storing a friction coefficient. |
| | | | A suggested rendering model is F_f = mu * Fn, where mu is a friction coefficient, and Fn is a normal force applied by the body part on the surface. |
| vibrotactileTexture (vibrotactileTexture) | array<enumeration, textureInfo> | NULL | Represents a texture perceived by body parts when sliding on a curved surface. |
| temperature (temperature) | array<enumeration, textureInfo> | NULL | Represents a perceived temperature of an object. |
| | | | It is described using a texture storing temperature distribution. |
| vibration (Vibration) | array<enumeration, textureInfo> | NULL | Represents a vibration signal. |
| | | | It is described using a texture that stores a signal amplitude and/or frequency. |
| custom (custom) | array<enumeration, textureInfo> | NULL | Texture including custom haptic data |

### 4. Interactivity extension (Interactivity extension) in glTF (3D model file format)

glTF is used for efficient transmission and loading of a 3D scene and model by an engine and an application program. glTF defines an extensible delivery format that simplifies the creation workflow and interactivity services by implementing interoperable use of 3D content across the industry.

The Moving Picture Experts Group (Moving Picture Expert Group, MPEG) has made interactivity extension for glTF and has initially designed related standards for interactivity (interactivity). For a haptic scene, the related standards for interactivity are mainly used to describe interaction between an avatar (avatar) and a haptic source (haptic source), and based on this, a haptic signal is triggered and generated.

Interactivity is defined based on a behavior (behavior). The behavior includes a trigger condition node (that is, trigger node, which may also be described as a trigger object) and an action node (that is, action node, which may also be described as an action object). The trigger node includes a collision condition (collision condition), a proximity condition (proximity condition), and a visibility condition (visibility condition). The action node includes a haptic feedback action (that is, ACTION_SET_HAPTIC), an activation node (ACTION_ACTIVATE), and the like. ACTION_SET_HAPTIC is implemented based on a haptic action node object (HapticActionNode object) or a haptic action media object (HapticActionMedia object).

The hapticObject property in HapticActionNode (as shown in Table 5) points to hapticObject in MPEG_haptic, and the mediaIndex (mediaIndex) property in HapticActionMedia (as shown in Table 6) further points to the accessor in the hapticObject, to access the haptic data.

**Table 5**

| Property (Property) | Type (Type) | Required (Required) | Default (Default) | Description (Description) |
|---|---|---|---|---|
| node | integer | M | N/A | ID of a node in a glTF node array |
| hapticObject | integer | O | N/A | Index of a haptic object in a hapticObjects array of MPEG_haptic extension |
| actionLocation (actionLocation ) | integer | O | 0xFFFFFFFF | A body part mask specifies a position at which a signal can be presented on a body. |
| washout (washout) | boolean | O | False | Specify whether an operation should trigger a washout of an associated device (reset to the origin). |
| useCollider (useCollider) | boolean | O | False | Be used with a collision trigger. If true, the rendering engine should use collision information to estimate a desired position of haptic feedback on the body. |
| | | | | If false, a signal should be presented based on information specified in a haptic file. |
| materialHaptic Modality (materialHaptic Modality) | array(enum) | O | N/A | List of material haptic modalities that should be presented |
| hapticActionM edias (hapticActionM edias) | array(HapticA ctionMedia) | M | N/A | List of haptic action media |

**Table 6**

| Property (Property) | Type (Type) | Required (Required) | Default (Default) | Description (Description) |
|---|---|---|---|---|
| mediaIndex (mediaIndex) | integer | M | N/A | Be associated with an index in an accessor array of haptic data. |
| perceptionIndices (perceptionIndices) | array(integer) | M | N/A | Media perception indices that should be presented. If the list is empty, all perceptions should be presented. |
| hapticModality (hapticModality) | array(enumeration) | O | N/A | List of presentable haptic modalities |
| hapticControl (hapticControl) | enumeration | O | HAPTIC_ PLAY | One of defined haptic rendering control elements |
| loop (loop) | boolean | O | False | Specify whether haptic rendering of data should loop continuously. |

An object in embodiments of this application includes at least one of the following: a scene (scene), a node (node), a mesh (mesh), a material (material), a vertex (vertices), a face (face), a primitive (primitive), and the like.

A haptic data processing method and a related device provided in embodiments of this application are described in detail below with reference to the accompanying drawings by using some embodiments and application scenarios thereof.

As shown in FIG. 2, an embodiment of this application provides a haptic data processing method, performed by a render side, where the render side includes a rendering engine or a display engine. The method includes the following steps.

Step 201: Obtain haptic data based on data source position related information in an action object or a trigger object in an interactivity behavior.

Optionally, the action object and the trigger object are objects in a behavior (behavior) defined by a standard for interactivity (that is, the interactivity behavior), and the standard for interactivity is a standard for describing interaction between an avatar and a haptic source.

Optionally, the action object includes a haptic action media object, and the haptic action media object includes a media index, where the media index is associated with the data source position related information.

Alternatively, the trigger object includes a node or a primitive (primitive), and a property of the node or primitive is associated with the data source position related information.

Optionally, the data source position related information includes information indicating a position of the haptic data (such as a haptic data source).

As an implementation, the obtaining haptic data based on data source position related information in an action object includes: By using an interactivity processing model, a render side obtains the haptic data based on a haptic feedback action (ACTION_SET_HAPTIC), where at least mediaIndex included in a HapticActionMedia object may point to haptic data in MPEG_haptic.

Optionally, ACTION_SET_HAPTIC may also be associated with a particular haptic processing object (object), and the object may indicate information such as a haptic data source that is based on a haptic material.

As an implementation, the obtaining haptic data based on data source position related information in a trigger object includes: indicating, based on a property (property) associated with a node/primitive in the trigger object, the node/primitive to be associated with a haptic material property, where the haptic material property may point to the haptic data source corresponding to a haptic material.

Optionally, the haptic data source includes the haptic data, and the haptic data includes texture haptic data.

Step 202: Obtain target haptic data from the haptic data based on trigger information associated with the trigger object.

The trigger information includes at least one of the following: whether a collision occurs, collision position information, and collision manner information.

Optionally, the target haptic data is haptic data that needs to be rendered.

In this embodiment of this application, the haptic data is obtained based on the data source position related information in the action object or the trigger object in the interactivity behavior, and the target haptic data is obtained from the haptic data based on the trigger information associated with the trigger object, where the trigger information includes at least one of the following: whether a collision occurs, collision position information, and collision manner information. With the above solution, different target haptic data can be selected, based on the trigger information associated with the trigger object, from the haptic data for rendering, thereby obtaining different haptic feedback characteristics based on different target haptic data, and improving the flexibility of haptic feedback.

Optionally, the obtaining haptic data includes:
obtaining, based on property information in the action object or the trigger object, metadata (metadata) information associated with the haptic data; and
obtaining the haptic data from a haptic data source based on the metadata (metadata) information and the data source position related information in the action object or the trigger object in the interactivity behavior, where
the metadata (metadata) information includes at least one of: storage format information of the haptic data, resolution information of the haptic data, and haptic type information associated with the haptic data.

Herein, the corresponding haptic data is obtained from the haptic data source based on the metadata information, for example, haptic data of a corresponding haptic type or resolution is obtained.

For example, a property may be added to an object associated with ACTION_SET_HAPTIC to indicate metadata (metadata) information associated with the haptic data source, or the metadata may be indicated by the haptic material property associated with the node/primitive in the trigger object.

Optionally, the method in this embodiment of this application further includes:
determining an obtaining manner of the haptic data based on first property information associated with the trigger object or the action object.

The first property information includes at least one of the following items:
item 1: obtaining manner identification information;
item 2: haptic feedback type; and
item 3: haptic material type.

The obtaining manner includes at least one of the following:
obtaining a haptic data source based on the data source position related information in the action object; and
obtaining a haptic data source based on the data source position related information in the trigger object.

For example, an object associated with ACTION_SET_HAPTIC (such as HapticActionNode or HapticActionMedia) may use a property to indicate the obtaining manner of the haptic data, and the property may indicate whether the haptic data is obtained based on the trigger object.

For the above item 1, whether the haptic data is obtained based on the data source position related information in the trigger object is indicated by the obtaining manner identification information. For example, the obtaining manner identification information is represented by a flag, where flag=0 indicates that the haptic data is obtained based on the data source position related information in the trigger object, and flag=1 indicates that the haptic data is obtained based on the data source position related information in the action object, for example, obtained by HapticActionNode or HapticActionMedia.

Optionally, the flag may be an existing useCollider flag (use Collider flag) or a newly added flag.

For the above item 2, the obtaining manner of the haptic data may be known based on the haptic feedback type indicated by a haptic action node (HapticActionNode). For example, for preset types of haptic feedback such as stiffness/friction/texture haptic/vibration haptic, the haptic data source is obtained based on the data source position related information in the trigger object.

For the above item 3, for example, if the material haptic property (materialHapticModality) of an object related to a feedback action (HapticActionNode) is not empty or is indicated as a preset material type, the haptic data is obtained based on the data source position related information in the trigger object.

Optionally, the obtaining target haptic data from the haptic data based on trigger information associated with the trigger object includes:
obtaining texture coordinates corresponding to a collision position between sub-objects in the trigger object; and
obtaining the target haptic data from the haptic data based on the texture coordinates.

The sub-object in the trigger object includes a mesh vertex.

In this embodiment of this application, if a mesh (mesh) is used to implement a geometry (geometry) of a haptic source (haptic source), the mesh may be attached to a haptic material, and the mesh may be directly used in the trigger object in interactivity for determining a collision condition (collision condition).

When the trigger object (such as a collision trigger) in the interactivity behavior is activated, the rendering engine (rendering engine) determines a mesh vertex corresponding to a touch point (between the haptic source and an avatar (avatar)) based on implementation, and accordingly obtains the texture coordinates corresponding to the mesh vertex that corresponds to the touch point. Then, the target haptic data corresponding to the texture coordinates is selected from the haptic data, so as to extract discrete haptic data based on the texture coordinates, further improving the flexibility of haptic feedback.

Optionally, the obtaining target haptic data from the haptic data based on trigger information associated with the trigger object includes:
obtaining texture coordinates associated with a sub-object, in the trigger object, on which a collision occurs; and
obtaining the target haptic data from the haptic data based on the texture coordinates.

The sub-object on which a collision occurs includes a primitive (primitives) or a node (node).

In this embodiment of this application, a plurality of relatively simple primitives (primitives) are used to form a geometry of a haptic source, and these primitives are used in the trigger object in interactivity for determining a collision condition (collision condition).

When the trigger object (such as a collision trigger) in the interactivity behavior is activated, the rendering engine obtains texture coordinates corresponding to a node/primitive in the corresponding trigger object, and the rendering engine obtains the target haptic data from a haptic material data source based on one or more texture coordinates and generates a haptic feedback signal, thereby extracting discrete haptic data based on the texture coordinates, and further improving the flexibility of haptic feedback.

Optionally, the obtaining texture coordinates associated with a sub-object, in the trigger object, on which a collision occurs includes:
obtaining the texture coordinates based on property information of the sub-object on which the collision occurs.

As an implementation, the property information of the sub-object on which the collision occurs includes the texture coordinates or vertex information of a mesh, and the vertex information of the mesh corresponds to the texture coordinates.

For example, the property associated with the node/primitive in the trigger object may indicate specific texture coordinates of a haptic material corresponding to the node/primitive. When the rendering engine determines that a collision occurs on the node/primitive, the corresponding texture coordinates may be obtained.

Optionally, the property associated with the node/primitive in the trigger object needs to be defined by a standard. For example, the trigger object includes a texture coordinate list (texture coordinate list), a node list (node list)/primitive list (primitive list) in the trigger object corresponds to the texture coordinate list, and each node/primitive corresponds to one of texture coordinates in the texture coordinate list.

Optionally, specific texture coordinates of the haptic material may alternatively be indirectly indicated. For example, the property associated with the node/primitive in the trigger object may indicate a specific vertex of a mesh to which the haptic material is attached, and the vertex of the mesh may be mapped to texture coordinates of the haptic material.

Optionally, the obtaining target haptic data from the haptic data based on trigger information associated with the trigger object includes:
determining a rendering manner based on second property information associated with the action object; and
in a case that the rendering manner indicates to obtain the target haptic data from the haptic data based on texture coordinates, obtaining the target haptic data from the haptic data based on trigger information associated with the trigger object.

The second property information includes at least one of the following:
A1: rendering manner identification information, where the rendering manner identification may be an existing useCollider flag or a newly added flag;
A2: haptic feedback type, where for example, for preset types of haptic feedback such as stiffness/friction/texture haptic/vibration texture haptic, the render side extracts the target haptic data from the haptic data based on the texture coordinates, for rendering feedback; and
A3: haptic material type, where for example, when the material haptic property (materialHapticModality) of an object (HapticActionNode) related to the feedback action is not empty or is indicated as a preset material type, the render side extracts the target haptic data from the haptic data based on texture coordinates for rendering feedback.

In this embodiment of this application, an object associated with ACTION_SET_HAPTIC (such as HapticActionNode or HapticActionMedia) may use a property to indicate a rendering manner of the haptic data, and the property may indicate whether the render side extracts the target haptic data from the haptic data based on the texture coordinates, for rendering feedback.

Optionally, the collision manner includes at least one of the following: sliding over a surface, tapping, pressing, a contact point movement direction, and a contact point movement speed.

Optionally, the method in this embodiment of this application further includes:
obtaining the collision manner based on a user input modality (user input modality) property of the trigger object.

In this embodiment of this application, the collision manner is obtained based on the user input modality property of the trigger object, and the render side may trigger corresponding haptic feedback based on the collision manner.

Optionally, the obtaining haptic data based on data source position related information in an action object or a trigger object in an interactivity behavior includes:
obtaining the haptic data based on the data source position related information in the action object or the trigger object in the interactivity behavior and a collision manner.

In this embodiment of this application, the render side may determine the haptic data source based on the data source position related information in the action object or the trigger object in the interactivity behavior, and then may select the corresponding haptic data from the haptic data source based on the collision manner, so that the render side can subsequently report different haptic signals based on different collision manners.

Optionally, the obtaining target haptic data from the haptic data based on trigger information associated with the trigger object includes:
obtaining a texture coordinate sequence based on the collision manner; and
obtaining the target haptic data from the haptic data based on the texture coordinate sequence.

For example, a texture of the haptic material is mapped onto the mesh in a preset direction (horizontal, vertical, or the like), the contact point slides over the material surface in different directions (horizontal/vertical, and the like), and the render side captures haptic signals based on an order of different texture coordinates (that is, a texture coordinate sequence) to generate a haptic signal for feedback (that is, the target haptic signal). The texture coordinate order may include a plurality of groups of different texture coordinates. In addition, in this embodiment of this application, a plurality of different texture coordinate ordering manners may be preset, different ordering manners of texture coordinates correspond to different collision manners, and then a corresponding ordering manner of texture coordinates may be obtained based on a collision manner.

Based on the solution, the render side can extract a discrete haptic signal (that is, the target haptic signal) from the haptic signal based on the contact point and play the discrete haptic signal, thereby improving the flexibility of haptic feedback.

The haptic data processing method provided in this embodiment of this application may be performed by a haptic data processing apparatus. In embodiments of this application, the haptic data processing apparatus performing the haptic data processing method is used as an example to describe a haptic data processing apparatus provided in an embodiment of this application.

As shown in FIG. 3, an embodiment of this application provides a haptic data processing apparatus 300, including:
a first obtaining module 301, configured to obtain haptic data based on data source position related information in an action object or a trigger object in an interactivity behavior; and
a second obtaining module 302, configured to obtain target haptic data from the haptic data based on trigger information associated with the trigger object, where
the trigger information includes at least one of the following: whether a collision occurs, collision position information, and collision manner information.

Optionally, the first obtaining module includes:
a first obtaining submodule, configured to obtain, based on property information in the action object or the trigger object, metadata (metadata) information associated with the haptic data; and
a second obtaining submodule, configured to obtain the haptic data from a haptic data source based on the metadata (metadata) information and the data source position related information in the action object or the trigger object in the interactivity behavior, where
the metadata (metadata) information includes at least one of: storage format information of the haptic data, resolution information of the haptic data, and haptic type information associated with the haptic data.

Optionally, the apparatus further includes:
a determining module, configured to determine an obtaining manner of the haptic data based on first property information associated with the trigger object or the action object.

The first property information includes at least one of the following:
obtaining manner identification information;
haptic feedback type; and
haptic material type.

The obtaining manner includes at least one of the following:
obtaining a haptic data source based on the data source position related information in the action object; and
obtaining a haptic data source based on the data source position related information in the trigger object.

Optionally, the second obtaining module includes:
a third obtaining submodule, configured to obtain texture coordinates corresponding to a collision position between sub-objects in the trigger object; and
a fourth obtaining submodule, configured to obtain the target haptic data from the haptic data based on the texture coordinates.

Optionally, the second obtaining module includes:
a fifth obtaining submodule, configured to obtain texture coordinates associated with a sub-object, in the trigger object, on which a collision occurs; and
a sixth obtaining submodule, configured to obtain the target haptic data from the haptic data based on the texture coordinates.

Optionally, the fifth obtaining submodule is configured to obtain the texture coordinates based on property information of the sub-object on which the collision occurs.

Optionally, the property information of the sub-object on which the collision occurs includes the texture coordinates or vertex information of a mesh, and the vertex information of the mesh corresponds to the texture coordinates.

Optionally, the second obtaining module includes:
a determining submodule, configured to determine a rendering manner based on second property information associated with the action object; and
a seventh obtaining submodule, configured to: in a case that the rendering manner indicates to obtain the target haptic data from the haptic data based on texture coordinates, obtain the target haptic data from the haptic data based on trigger information associated with the trigger object.

The second property information includes at least one of the following:
rendering manner identification information;
haptic feedback type; and
haptic material type.

Optionally, the collision manner includes at least one of the following: sliding over a surface, tapping, pressing, a contact point movement direction, and a contact point movement speed.

Optionally, the apparatus further includes:
a third obtaining module, configured to obtain the collision manner based on a user input modality property of the trigger object.

Optionally, the first obtaining module is configured to obtain the haptic data based on the data source position related information in the action object or the trigger object in the interactivity behavior and a collision manner.

Optionally, the second obtaining module includes:
an eighth obtaining submodule, configured to obtain a texture coordinate sequence based on the collision manner; and
a ninth obtaining submodule, configured to obtain the target haptic data from the haptic data based on the texture coordinate sequence.

The apparatus in this embodiment of this application obtains the haptic data based on the data source position related information in the action object or the trigger object in the interactivity behavior, and obtains the target haptic data from the haptic data based on the trigger information associated with the trigger object, where the trigger information includes at least one of the following: whether a collision occurs, collision position information, and collision manner information. With the above solution, different target haptic data can be selected, based on the trigger information associated with the trigger object, from the haptic data for rendering, so as to obtain different haptic feedback characteristics based on the different target haptic data, thereby improving the flexibility of haptic feedback.

The haptic data processing apparatus provided in this embodiment of this application can implement various processes implemented by the method embodiment in FIG. 2 and achieve the same technical effects. To avoid repetition, details are not described herein again.

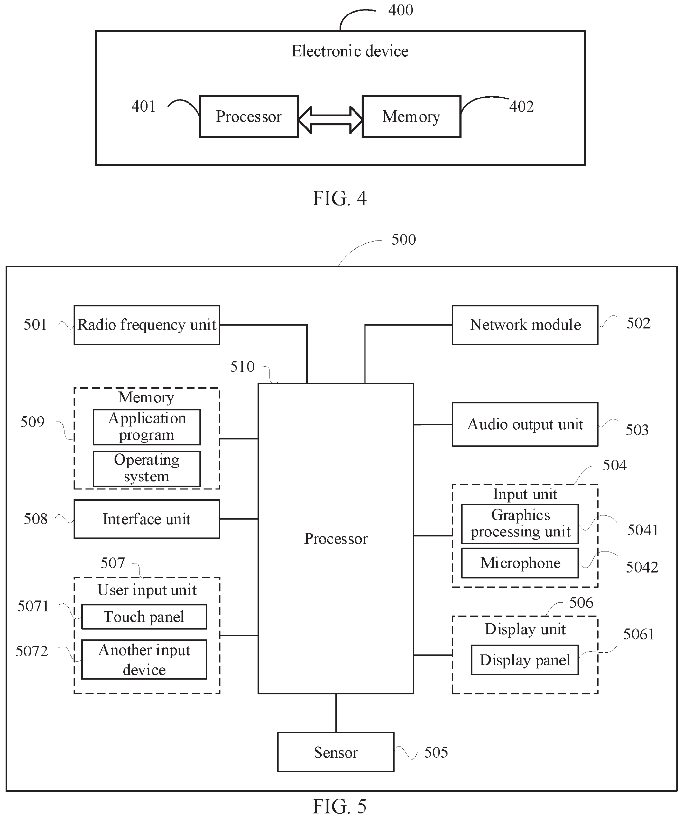

Optionally, as shown in FIG. 4, an embodiment of this application further provides an electronic device 400, including a processor 401 and a memory 402. The memory 402 stores a program or instructions runnable on the processor 401. For example, when the electronic device 400 is a terminal, the program or instructions implement steps of the above embodiment of the haptic data processing method when executed by the processor 401, and the same technical effects can be achieved. To avoid repetition, details are not described herein again.

An embodiment of this application further provides an electronic device, including a processor and a communication interface. The communication interface is coupled to the processor, and the processor is configured to run a program or instructions to implement the steps in the method embodiment shown in FIG. 2. This device embodiment corresponds to the above method embodiment, various implementation processes and implementations of the above method embodiment can all be applied to the embodiment of this electronic device, and the same technical effects can be achieved.

The electronic device may be a terminal, or may be a device other than a terminal, such as a server or a network attached storage (Network Attached Storage, NAS).

The terminal may be a terminal-side device such as a mobile phone, a tablet computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a mixed reality (mixed reality, MR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (a home device with a wireless communication function, for example, a refrigerator, a TV, a washing machine, or furniture), a game console, a personal computer (Personal Computer, PC), a teller machine, or a self-service machine. The wearable device includes a smart watch, a smart band, smart earphones, smart glasses, smart jewelry (a smart bracelet, a smart wrist chain, a smart ring, a smart necklace, a smart ankle bracelet, a smart foot chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal is not limited in this embodiment of this application.

The server may be an independent physical server, or may be a server cluster or distributed system including a plurality of physical servers, or may be a cloud server. The cloud server may provide cloud services, cloud databases, cloud computing, cloud functions, cloud storage, network services, cloud communications, middleware services, domain name services, security services, content delivery networks (Content Delivery Network, CDN), cloud computing services based on big data and artificial intelligence platforms, or the like.

For example, the electronic device is a terminal. FIG. 5 is a schematic diagram of a hardware structure of a terminal implementing an embodiment of this application.

The terminal 500 includes but is not limited to at least part of the following components: a radio frequency unit 501, a network module 502, an audio output unit 503, an input unit 504, a sensor 505, a display unit 506, a user input unit 507, an interface unit 508, a memory 509, a processor 510, and the like.

Persons skilled in the art can understand that the terminal 500 may further include a power supply (such as a battery) for supplying power to each component, and the power supply may be logically connected to the processor 510 via a power management system, thereby implementing functions such as charging, discharging, and power consumption management via the power management system. The terminal structure shown in FIG. 5 does not constitute a limitation on the terminal. The terminal may include more or fewer components than those shown, or combine some components, or arrange different components. Details are not described herein.

It should be understood that, in this embodiment of this application, the input unit 504 may include a graphics processing unit (Graphics Processing Unit, GPU) 5041 and a microphone 5042, and the graphics processing unit 5041 processes image data of still pictures or videos obtained by an image capture apparatus (such as a camera) in a video capture mode or an image capture mode, or may process obtained point cloud data. The display unit 506 may include a display panel 5061, where the display panel 5061 may be configured in the form of a liquid crystal display, an organic light-emitting diode, or the like. The user input unit 507 includes at least one of a touch panel 5071 and another input device 5072. The touch panel 5071 is also referred to as a touch screen. The touch panel 5071 may include two parts: a touch detection apparatus and a touch controller. The another input device 5072 may include but is not limited to a physical keyboard, a function key (such as a volume control key or an on/off key), a trackball, a mouse, and a joystick. Details are not described herein.

In this embodiment of this application, after receiving downlink data from a network-side device, the radio frequency unit 501 may transmit the downlink data to the processor 510 for processing. In addition, the radio frequency unit 501 may transmit uplink data to the network-side device. Generally, the radio frequency unit 501 includes but is not limited to an antenna, an amplifier, a transceiver, a coupler, a low-noise amplifier, a duplexer, and the like.

The memory 509 may be used to store a software program or instructions as well as various data. The memory 509 may mainly include a first storage area storing the program or instructions and a second storage area storing the data. The first storage area may store an operating system, an application program or instructions required for at least one function (such as a sound playing function and an image playing function), and the like. In addition, the memory 509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, the processor 510 integrates an application processor and a modem processor. The application processor mainly processes operations related to an operating system, a user interface, and an application program. The modem processor mainly processes a wireless communication signal, such as a baseband processor. It can be understood that the modem processor may alternatively not be integrated into the processor 510.

The processor 510 is configured to obtain haptic data based on data source position related information in an action object or a trigger object in an interactivity behavior; and
obtain target haptic data from the haptic data based on trigger information associated with the trigger object, where
the trigger information includes at least one of the following: whether a collision occurs, collision position information, and collision manner information.

Optionally, the processor 510 is further configured to:
obtain, based on property information in the action object or the trigger object, metadata (metadata) information associated with the haptic data; and
obtain the haptic data from a haptic data source based on the metadata (metadata) information and the data source position related information in the action object or the trigger object in the interactivity behavior, where
the metadata (metadata) information includes at least one of: storage format information of the haptic data, resolution information of the haptic data, and haptic type information associated with the haptic data.

Optionally, the processor 510 is further configured to:
determine an obtaining manner of the haptic data based on first property information associated with the trigger object or the action object.

The first property information includes at least one of the following:
obtaining manner identification information;
haptic feedback type; and
haptic material type.

The obtaining manner includes at least one of the following:
obtaining a haptic data source based on the data source position related information in the action object; and
obtaining a haptic data source based on the data source position related information in the trigger object.

Optionally, the processor 510 is further configured to:
obtain texture coordinates corresponding to a collision position between sub-objects in the trigger object; and
obtain the target haptic data from the haptic data based on the texture coordinates.

Optionally, the processor 510 is further configured to:
obtain texture coordinates associated with a sub-object, in the trigger object, on which a collision occurs; and
obtain the target haptic data from the haptic data based on the texture coordinates.

Optionally, the processor 510 is further configured to:
obtain the texture coordinates based on property information of the sub-object on which the collision occurs.

Optionally, the property information of the sub-object on which the collision occurs includes the texture coordinates or vertex information of a mesh, and the vertex information of the mesh corresponds to the texture coordinates.

Optionally, the processor 510 is further configured to:
determine a rendering manner based on second property information associated with the action object; and
in a case that the rendering manner indicates to obtain the target haptic data from the haptic data based on texture coordinates, obtain the target haptic data from the haptic data based on trigger information associated with the trigger object.

The second property information includes at least one of the following:
rendering manner identification information;
haptic feedback type; and
haptic material type.

Optionally, the collision manner includes at least one of the following: sliding over a surface, tapping, pressing, a contact point movement direction, and a contact point movement speed.

Optionally, the processor 510 is further configured to:
obtain the collision manner based on a user input modality property of the trigger object.

Optionally, the processor 510 is further configured to:
obtain the haptic data based on the data source position related information in the action object or the trigger object in the interactivity behavior and a collision manner.

Optionally, the processor 510 is further configured to:
obtain a texture coordinate sequence based on the collision manner; and
obtain the target haptic data from the haptic data based on the texture coordinate sequence.

In this embodiment of this application, the haptic data is obtained based on the data source position related information in the action object or the trigger object in the interactivity behavior, and the target haptic data is obtained from the haptic data based on the trigger information associated with the trigger object, where the trigger information includes at least one of the following: whether a collision occurs, collision position information, and collision manner information. With the above solution, different target haptic data can be selected, based on the trigger information associated with the trigger object, from the haptic data for rendering, so as to obtain different haptic feedback characteristics based on the different target haptic data, thereby improving the flexibility of haptic feedback.

It can be understood that, for the implementation processes of various implementations mentioned in this embodiment, reference may be made to the related description of the haptic data processing method in the method embodiment, and the same or corresponding technical effects can be achieved. To avoid repetition, details are not described herein again.

An embodiment of this application further provides a readable storage medium. A program or instructions are stored on the readable storage medium, the program or instructions implement various processes of the above embodiment of the haptic data processing method when executed by a processor, and the same technical effects can be achieved. To avoid repetition, details are not described herein again.

The processor is the processor in the terminal described in the above embodiment. The readable storage medium includes a computer-readable storage medium, such as a read-only memory (ROM), a random access memory (RAM), a magnetic disk, or an optical disk. In some examples, the readable storage medium may be a non-transitory readable storage medium.

Another embodiment of this application provides a chip. The chip includes a processor and a communication interface. The communication interface is coupled to the processor, and the processor is configured to run a program or instructions to implement various processes of the above embodiment of the haptic data processing method, and can achieve the same technical effects. To avoid repetition, details are not described herein again.

It should be understood that the chip mentioned in this embodiment of this application may include a system-level chip (also referred to as a system chip, a chip system, or a system-on-chip), and may also include an independent display chip and the like.

Another embodiment of this application provides a computer program/program product. The computer program/program product is stored in a storage medium, and the computer program/program product is executed by at least one processor to implement various processes of the above embodiment of the haptic data processing method, and can achieve the same technical effects. To avoid repetition, details are not described herein again.

It should be noted that, in this document, the term "include", "comprise" or any other variants thereof are intended to cover non-exclusive inclusion, such that a process, method, article, or apparatus including a series of elements not only includes those elements, but also includes other elements not explicitly listed, or includes elements inherent to such process, method, article, or apparatus. Without further limitation, an element defined by the statement "including one..." does not exclude the presence of additional identical elements in the process, method, article, or apparatus including that element. In addition, it should be figured out that the scope of the methods and apparatuses in embodiments of this application is not limited to performing the functions in the order shown or discussed, or may include performing the functions basically simultaneously or in a reverse order according to the functions involved. For example, the described method may be performed in an order different from that described, or steps may be added, omitted or combined. In addition, features described with reference to some examples may be combined in other examples.

Through the description of the above embodiments, persons skilled in the art can clearly understand that the method in the above embodiment can be implemented by means of a computer software product plus necessary general hardware platform, or by hardware. The computer software product is stored in a storage medium (such as a ROM, a RAM, a magnetic disk, or an optical disk), and includes several instructions for enabling a terminal or network-side device to perform the methods described in various embodiments of this application.

Embodiments of this application have been described above with reference to the accompanying drawings, but this application is not limited to the specific embodiments described above. The specific embodiments described above are merely illustrative, rather than restrictive. Persons of ordinary skill in the art can make many forms of embodiments under the inspiration of this application, without departing from the purpose of this application and the protection scope of the claims, and these embodiments all fall within the protection of this application.

## Claims

1. A haptic data processing method, performed by a render side and comprising:
obtaining haptic data based on data source position related information in an action object or a trigger object in an interactivity behavior; and
obtaining target haptic data from the haptic data based on trigger information associated with the trigger object, wherein
the trigger information comprises at least one of the following: whether a collision occurs, collision position information, and collision manner information.

2. The method according to claim 1, wherein the obtaining haptic data comprises:
obtaining, based on property information in the action object or the trigger object, metadata (metadata) information associated with the haptic data; and
obtaining the haptic data from a haptic data source based on the metadata (metadata) information and the data source position related information in the action object or the trigger object in the interactivity behavior, wherein
the metadata (metadata) information comprises at least one of: storage format information of the haptic data, resolution information of the haptic data, and haptic type information associated with the haptic data.

3. The method according to claim 1, further comprising:
determining an obtaining manner of the haptic data based on first property information associated with the trigger object or the action object, wherein
the first property information comprises at least one of the following:
obtaining manner identification information;
haptic feedback type; and
haptic material type; wherein
the obtaining manner comprises at least one of the following:
obtaining a haptic data source based on the data source position related information in the action object; and
obtaining a haptic data source based on the data source position related information in the trigger object.

4. The method according to claim 1, wherein the obtaining target haptic data from the haptic data based on trigger information associated with the trigger object comprises:
obtaining texture coordinates corresponding to a collision position between sub-objects in the trigger object; and
obtaining the target haptic data from the haptic data based on the texture coordinates.

5. The method according to claim 1, wherein the obtaining target haptic data from the haptic data based on trigger information associated with the trigger object comprises:
obtaining texture coordinates associated with a sub-object, in the trigger object, on which a collision occurs; and
obtaining the target haptic data from the haptic data based on the texture coordinates.

6. The method according to claim 5, wherein the obtaining texture coordinates associated with a sub-object, in the trigger object, on which a collision occurs comprises:
obtaining the texture coordinates based on property information of the sub-object on which the collision occurs.

7. The method according to claim 6, wherein the property information of the sub-object on which the collision occurs comprises the texture coordinates or vertex information of a mesh, and the vertex information of the mesh corresponds to the texture coordinates.

8. The method according to any one of claims 1 to 7, wherein the obtaining target haptic data from the haptic data based on trigger information associated with the trigger object comprises:
determining a rendering manner based on second property information associated with the action object; and
in a case that the rendering manner indicates to obtain the target haptic data from the haptic data based on texture coordinates, obtaining the target haptic data from the haptic data based on trigger information associated with the trigger object, wherein
the second property information comprises at least one of the following:
rendering manner identification information;
haptic feedback type; and
haptic material type.

9. The method according to claim 1, wherein the collision manner comprises at least one of the following: sliding over a surface, tapping, pressing, a contact point movement direction, and a contact point movement speed.

10. The method according to claim 1 or 9, further comprising:
obtaining the collision manner based on a user input modality property of the trigger object.

11. The method according to claim 1, wherein the obtaining haptic data based on data source position related information in an action object or a trigger object in an interactivity behavior comprises:
obtaining the haptic data based on the data source position related information in the action object or the trigger object in the interactivity behavior and a collision manner.

12. The method according to claim 1, wherein the obtaining target haptic data from the haptic data based on trigger information associated with the trigger object comprises:
obtaining a texture coordinate sequence based on the collision manner; and
obtaining the target haptic data from the haptic data based on the texture coordinate sequence.

13. A haptic data processing apparatus, comprising:
a first obtaining module, configured to obtain haptic data based on data source position related information in an action object or a trigger object in an interactivity behavior; and
a second obtaining module, configured to obtain target haptic data from the haptic data based on trigger information associated with the trigger object, wherein
the trigger information comprises at least one of the following: whether a collision occurs, collision position information, and collision manner information.

14. The apparatus according to claim 13, wherein the first obtaining module comprises:
a first obtaining submodule, configured to obtain, based on property information in the action object or the trigger object, metadata (metadata) information associated with the haptic data; and
a second obtaining submodule, configured to obtain the haptic data from a haptic data source based on the metadata (metadata) information and the data source position related information in the action object or the trigger object in the interactivity behavior, wherein
the metadata (metadata) information comprises at least one of: storage format information of the haptic data, resolution information of the haptic data, and haptic type information associated with the haptic data.

15. The apparatus according to claim 13, further comprising:
a determining module, configured to determine an obtaining manner of the haptic data based on first property information associated with the trigger object or the action object, wherein
the first property information comprises at least one of the following:
obtaining manner identification information;
haptic feedback type; and
haptic material type; wherein
the obtaining manner comprises at least one of the following:
obtaining a haptic data source based on the data source position related information in the action object; and
obtaining a haptic data source based on the data source position related information in the trigger object.

16. The apparatus according to claim 13, wherein the second obtaining module comprises:
a third obtaining submodule, configured to obtain texture coordinates corresponding to a collision position between sub-objects in the trigger object; and
a fourth obtaining submodule, configured to obtain the target haptic data from the haptic data based on the texture coordinates.

17. The apparatus according to claim 13, wherein the second obtaining module comprises:
a fifth obtaining submodule, configured to obtain texture coordinates associated with a sub-object, in the trigger object, on which a collision occurs; and
a sixth obtaining submodule, configured to obtain the target haptic data from the haptic data based on the texture coordinates.

18. The apparatus according to claim 17, wherein the fifth obtaining submodule is configured to obtain the texture coordinates based on property information of the sub-object on which the collision occurs.

19. The apparatus according to claim 18, wherein the property information of the sub-object on which the collision occurs comprises the texture coordinates or vertex information of a mesh, and the vertex information of the mesh corresponds to the texture coordinates.

20. The apparatus according to any one of claims 13 to 19, wherein the second obtaining module comprises:
a determining submodule, configured to determine a rendering manner based on second property information associated with the action object; and
a seventh obtaining submodule, configured to: in a case that the rendering manner indicates to obtain the target haptic data from the haptic data based on texture coordinates, obtain the target haptic data from the haptic data based on trigger information associated with the trigger object, wherein
the second property information comprises at least one of the following:
rendering manner identification information;
haptic feedback type; and
haptic material type.

21. The apparatus according to claim 13, wherein the collision manner comprises at least one of the following: sliding over a surface, tapping, pressing, a contact point movement direction, and a contact point movement speed.

22. The apparatus according to claim 13 or 21, further comprising:
a third obtaining module, configured to obtain the collision manner based on a user input modality property of the trigger object.

23. The apparatus according to claim 13, wherein the first obtaining module is configured to obtain the haptic data based on the data source position related information in the action object or the trigger object in the interactivity behavior and a collision manner.

24. The apparatus according to claim 13, wherein the second obtaining module comprises:
an eighth obtaining submodule, configured to obtain a texture coordinate sequence based on the collision manner; and
a ninth obtaining submodule, configured to obtain the target haptic data from the haptic data based on the texture coordinate sequence.

25. An electronic device, comprising a processor and a memory, wherein the memory stores a program or instructions runnable on the processor; and when executed by the processor, the program or instructions implement the steps of the haptic data processing method according to any one of claims 1 to 12.

26. A readable storage medium, wherein a program or instructions are stored on the readable storage medium; and when executed by a processor, the program or instructions implement the steps of the haptic data processing method according to any one of claims 1 to 12.

27. A chip, wherein the chip comprises a processor and a communication interface, the communication interface is coupled to the processor, and the processor is configured to run a program or instructions to implement the steps of the haptic data processing method according to any one of claims 1 to 12.
